# EUROPEAN PATENT SPECIFICATION

(11) **EP 3 901 230 B1**
(45) Date of publication and mention of the grant of the patent: **08.02.2023**
(21) Application number: 21167295.1
(22) Date of filing: 07.04.2021
(51) Int. Cl.: C09D 183/16

(54) **COATING AGENT COMPOSITION FOR FORMING HIGH-HARDNESS FILM**
BESCHICHTUNGSZUSAMMENSETZUNG ZUR HERSTELLUNG VON HOCHHARTEN FILMEN
COMPOSITION D'AGENT DE REVÊTEMENT POUR FORMER UN FILM À TRÈS HAUTE DURETÉ

(30) Priority: 23.04.2020 JP 2020076853
(43) Date of publication of application: 27.10.2021
(73) Proprietor: Shin-Etsu Chemical Co., Ltd., Tokyo 100-0005 (JP)
(72) Inventor: ABE, Shinji, Gunma (JP)
(74) Representative: Wibbelmann, Jobst

(56) References cited:
- US-A1- 2020 024 479
- US-B2- 10 093 831

## Description

### TECHNICAL FIELD

The present invention relates to a coating agent composition for forming a high-hardness film.

### BACKGROUND ART

Polysilazane is used for various uses as a material for forming a moistureproof film for an electronic display or a semiconductor display such as an organic EL display, and forming an interlayer insulating film, a passivation film, a top coat, a flat film, or the like in devices such as semiconductors and LEDs. Furthermore, making use of the transparency and hardness of a cured polysilazane film, use as a coating agent for the body of a vehicle, the outer wall of a building, or the like is being considered.

As a polysilazane-containing coating agent, Patent Document 1 discloses a composition containing inorganic polysilazane. However, although a fine film can be formed with inorganic polysilazane, an aromatic hydrocarbon solvent such as toluene and xylene is required as a solvent. Therefore, it is pointed out that there is harm to health, and the composition can only be used in limited places.

Accordingly, study is being made on organic polysilazane having organic groups introduced in a side chain with improved solubility in organic solvents (Patent Document 2). However, the greater the proportion of organic groups, the poorer the curability, and the lower the strength of the film after curing.

In addition, if drops of water remain on the body of a vehicle or the outer wall of a building, dirt becomes adhered to the body along the drops of water. Therefore, demands for improving water repellency of coating surfaces are also rising.

To improve water repellency, silicone with both terminals carboxyl-modified is added to a polysilazane-based compound in Patent Document 3. In addition, in Patent Document 4, a side chain of polysilazane is modified with perfluoro polyether. However, in these cases, strength of the cured film is markedly lowered, and moreover, fluorine-containing compounds are not favorable from the viewpoint of environmental protection.

US 2020/024479 A1 discloses a coating composition based on a hydrocarbon solvent and an organic modified polysilazane.

### CITATION LIST

### PATENT LITERATURE

Patent Document 1: JP 2011-142207 A
Patent Document 2: WO 2015/163360 A1
Patent Document 3: WO 2016/121544 A1
Patent Document 4: JP 2013-185038 A

### SUMMARY OF INVENTION

### TECHNICAL PROBLEM

The present invention has been made to solve the above-described problems, and an object thereof is to provide a coating agent composition for forming a high-hardness film which contains polysilazane forming a film that is soluble in highly safe organic solvents, and enables to form a film with high hardness and excellence in water repellency.

### SOLUTION TO PROBLEM

To solve the above-described problems, the present invention provides a coating agent composition for forming a high-hardness film comprising:
(A) polysilazane having a repeating unit shown by the following formula (1) and a repeating unit shown by the following formula (2), wherein a ratio of a number of the repeating unit shown by the formula (2) to a total number of the repeating units shown by the formulae (1) and (2) is 0.2 to 0.5;
(B) an aliphatic hydrocarbon solvent having a flash point of 21°C to 55°C; and
(C) dibutyl ether;
   wherein a blended amount of the component (C) is 0.1 to 20 mass% of a total blended amount of the component (B) and the component (C), and 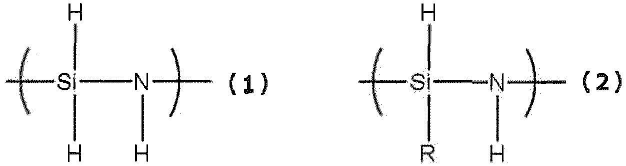
wherein R represents a group selected from an aliphatic hydrocarbon group having 1 to 6 carbon atoms, an aromatic hydrocarbon group having 6 to 12 carbon atoms, and an alkoxy group having 1 to 6 carbon atoms, and each R is the same or different in one molecule of the polysilazane.

With such a coating agent composition for forming a high-hardness film, polysilazane forming a film is soluble in highly safe organic solvents, and a film with high hardness and excellence in water repellency can be formed.

Furthermore, the R in the formula (2) is preferably a methyl group.

Such polysilazane having a methyl group can be easily prepared, and in addition, hardness of the film is increased.

Furthermore, a blended amount of the component (A) is preferably 0.1 to 20 mass% of a total blended amount of the components (A) to (C).

This allows favorable coating property and a uniform film can be achieved.

In the coating agent composition, the component (B) preferably comprises at least one aliphatic hydrocarbon solvent selected from aliphatic hydrocarbons having 9 to 12 carbon atoms.

Such a composition has little odor or influence on the environment, and since volatility of the solvent is high, the composition is excellent in workability, and the solvent does not remain in a film so that a film with high hardness can be achieved.

The coating agent composition preferably further comprises (D) a curing catalyst.

Such a composition allows curing at room temperature and in a short time, and becomes excellent in workability.

In addition, the present invention provides a cured film comprising a cured material of the above-described coating agent composition for forming a high-hardness film.

Such a cured film has high hardness and is excellent in water repellency.

In addition, the present invention provides a high-hardness coating film comprising the above-described cured film, wherein the cured film on a glass substrate has a pencil hardness of 3H or harder as measured by a method described in JIS K 5600-5-4:1999.

Such a high-hardness coating film is resistant to scratches, and allows a high-hardness coating film with good design where scratches do not become conspicuous. This high-hardness coating film is useful as a coating film for a transport vehicle and as a film for preventing scratches to housing facilities such as a sink or a sanitary facility.

In addition, the present invention provides a transport vehicle comprising the above-described cured film.

The inventive cured film has high hardness and is excellent in water repellency, and therefore, can be used favorably particularly for a transport vehicle.

### ADVANTAGEOUS EFFECTS OF INVENTION

As described above, according to the inventive coating agent composition for forming a high-hardness film, polysilazane for forming a film is soluble in organic solvents that are highly safe, for example, with little odor and low toxicity. Therefore, the composition has favorable workability together with improved storage stability and wettability to a base material, and provides a cured film with high hardness and water repellency.

### DESCRIPTION OF EMBODIMENTS

As described above, development of a coating agent whose film-forming component can be dissolved in highly safe solvents and which allows a film having high hardness and excellence in water repellency is required.

To solve the above problems, the present inventors have earnestly studied and found out that a coating agent composition for forming a high-hardness film containing, at a certain blending ratio, polysilazane that satisfies a certain range of high modification rate, an aliphatic hydrocarbon solvent having a flash point within a certain range, and dibutyl ether provides a film with high hardness and water repellency; thereby bringing the present invention to completion.

That is, the present invention is a coating agent composition for forming a high-hardness film containing:
(A) polysilazane having a repeating unit shown by the following formula (1) and a repeating unit shown by the following formula (2), where a ratio of a number of the repeating unit shown by the formula (2) to a total number of the repeating units shown by the formulae (1) and (2) is 0.2 to 0.5;
(B) an aliphatic hydrocarbon solvent having a flash point of 21°C to 55°C; and
(C) dibutyl ether;
   where a blended amount of the component (C) is 0.1 to 20 mass% of a total blended amount of the component (B) and the component (C), and 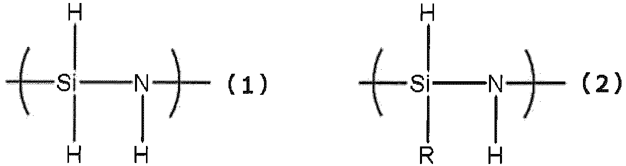
where R represents a group selected from an aliphatic hydrocarbon group having 1 to 6 carbon atoms, an aromatic hydrocarbon group having 6 to 12 carbon atoms, and an alkoxy group having 1 to 6 carbon atoms, and each R is the same or different in one molecule of the polysilazane.

An embodiment of the present invention will be described below, but this is just an example, and the present invention is not limited thereto. Furthermore, it goes without saying that various modifications are possible unless deviating from the technical concept of the present invention.

### <Coating Agent Composition for Forming High-Hardness Film>

The inventive coating agent composition for forming a high-hardness film is a composition that contains the following component (A), component (B), and component (C) as essential components, and may contain a component (D) and other additives as necessary.

### [Component (A): Polysilazane]

The component (A) polysilazane is a component that is cured to form a film (cured film).

The polysilazane used in the inventive coating agent composition for forming a high-hardness film contains a repeating unit shown by the following formula (1) and a repeating unit shown by the following formula (2) .

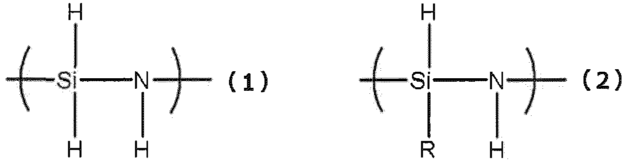

In the formula (2), R represents a group selected from an aliphatic hydrocarbon group having 1 to 6 carbon atoms, an aromatic hydrocarbon group having 6 to 12 carbon atoms, and an alkoxy group having 1 to 6 carbon atoms. Preferably, R represents a group selected from an aliphatic hydrocarbon group having 1 to 3 carbon atoms, an aromatic hydrocarbon group having 6 to 8 carbon atoms, and an alkoxy group having 1 to 3 carbon atoms, and examples include a methyl group, an ethyl group, a phenyl group, a methoxy group, an ethoxy group, and the like. In particular, a methyl group is particularly preferable since handling is easy and hardness of the cured film is not easily degraded. R can be appropriately selected for each repeating unit in one molecule of the polysilazane, and may be the same or different.

Furthermore, in the polysilazane, the ratio of the number of the repeating unit shown by the formula (2) to the total number of the repeating unit shown by the formula (1) and the repeating unit shown by the formula (2) is 0.2 to 0.5, preferably 0.3 to 0.4. A value less than 0.2 is not favorable since solubility to aliphatic hydrocarbons becomes poor, and a value greater than 0.5 is not favorable since hardness of the cured film becomes degraded.

Since the polysilazane contains the above-described organic group R, the contact angle with water described below becomes 90° (degree) or more, and excellent water repellency can be achieved.

In addition, the polysilazane preferably has a weight-average molecular weight of 200 to 1,000,000, more preferably 500 to 100,000, further preferably 1,000 to 20,000, from the viewpoints of solubility in the component (B), being a diluent component, and workability during the process of coating. A weight-average molecular weight of 200 or more is preferable since volatility does not become high, and the polysilazane hardly volatilizes when drying the organic solvent and processing the surface, so that the base material can be uniformly coated. A weight-average molecular weight of 1,000,000 or less is preferable since solubility in organic solvents becomes favorable and dissolution viscosity does not become high, so that the base material can be uniformly coated.

Note that the weight-average molecular weight in the present description refers to a weight-average molecular weight measured by gel permeation chromatography (GPC) in terms of polystyrene standard under the following conditions.

### [Measurement Conditions]

Developing solvent: tetrahydrofuran (THF)
Flow amount: 0.6 mL/min
Detector: UV detector
Column: TSK Guard column Super H-L, TSK gel Super Multipore HZ-M (4.6 mm I.D. × 15 cm × 4) (each of which are manufactured by Tosoh Corporation)
Column temperature: 40°C
Sample injection amount: 20 µL (a solution in THF in concentration of 0.5 mass%)

In addition, the polysilazane containing the repeating units shown by the formula (1) and the formula (2) may contain a branched structure or a cyclic structure besides these repeating units.

Furthermore, in the polysilazane, the blended amount of the component (A) is preferably 0.1 to 20 mass% of the total blended amount of the components (A), (B) and (C), more preferably 0.25 to 10 mass%. Within such ranges, coating property becomes favorable, and a uniform cured film can be achieved.

### [Component (B): Aliphatic Hydrocarbon Solvent]

The coating agent composition for forming a high-hardness film used in the present invention contains an aliphatic hydrocarbon solvent as a diluent. Note that in the present invention, "an aliphatic hydrocarbon solvent" refers to a solvent composed of an organic compound(s) that contains an aliphatic hydrocarbon(s) as a main component.

The aliphatic hydrocarbon solvent has a flash point within the range 21°C to 55°C, preferably within the range of 23°C to 45°C. A flash point of less than 21°C is not favorable since special storage conditions are required, and a flash point of more than 55°C is not favorable since volatility of the solvent becomes low and workability is degraded. Note that in the present invention, when the aliphatic hydrocarbon solvent is a mixture of two or more solvents, a "flash point" refers to the flash point of the component having the lowest flash point. A flash point can be measured by a method defined by JIS K 2265, and can be measured, for example, by the tag closed cup method described in JIS K 2265-1:2007.

Furthermore, the aliphatic hydrocarbon solvent preferably contains at least one aliphatic hydrocarbon selected from aliphatic hydrocarbons having 9 to 12 carbon atoms. An aliphatic hydrocarbon solvent containing an aliphatic hydrocarbon within this range is preferable since such a solvent has little odor or influence on the environment, and the solvent brings excellent workability due to high volatility.

Examples of the aliphatic hydrocarbon solvent include chain aliphatic hydrocarbons such as n-nonane, i-nonane, n-decane, i-decane, n-undecane, i-undecane, n-dodecane, i-dodecane; and cyclic aliphatic hydrocarbons such as p-menthane. Preferable solvents are i-nonane and i-dodecane since volatility is high, there is little odor, and workability becomes favorable.

As the aliphatic hydrocarbon solvent, a commercially available solvent can be used as long as the solvent has a flash point within the above-described range. Examples of such a solvent include Isopar G (44°C) and Isopar H (54°C) manufactured by Exxon Mobile Corporation, Kyowasol C-900 (23.1°C) manufactured by KH Neochem Co., Ltd., Marukasol R (48°C) and Swaclean 150 (33°C) manufactured by Maruzen Petrochemical Co., Ltd., IP Solvent 1620 (49°C) and IP Clean LX (45°C) manufactured by Idemitsu Kosan Co., Ltd., and SPCN-40 (44°C) and SP Clean 100 (53°C) manufactured by Isu Chemical Co., Ltd. Here, the flash point has been given in parentheses. Note that these solvents come under hazardous materials of the Fire Service Act categorized as Category IV inflammable liquids, Class II petroleums (water-insoluble liquids), and are easier to handle than Class I petroleums or the like having a lower flash point in view of restrictions such as storage conditions being looser.

### [Component (C): Dibutyl Ether]

The coating agent composition for forming a high-hardness film used in the present invention contains dibutyl ether so that solubility of the polysilazane, storage stability, and wettability to the base material can be improved.

The component (C) preferably contains water in an amount of 1,000 ppm or less, more preferably 500 ppm or less. The water content of 1,000 ppm or less is preferable since the polysilazane is prevented from reacting with water so that there is no risk of causing heat release, generation of hydrogen gas or ammonia gas, thickening, and gelation, etc.

The blended amount of the component (C) is 0.1 to 20 mass% of the total blended amount of the component (B) and the component (C), preferably 0.35 to 15 mass%. A blended amount of less than 0.1 mass% is not favorable since the solubility of the polysilazane to the aliphatic hydrocarbon solvent and the wettability of the coating agent composition to the base material sometimes become insufficient. A blended amount of more than 20 mass% is not favorable since the distinctive ethereal odor of dibutyl ether becomes strong so that there is risk of a problem occurring in workability.

### [Component (D): Curing Catalyst]

The coating agent composition for forming a high-hardness film used in the present invention can have (D) a curing catalyst added in addition to the components (A) to (C). Adding a curing catalyst is preferable since it becomes possible to form a coating film even under conditions where heat cannot be applied, for example, in an outdoor environment or in coating an organic substrate having no heat resistance.

The curing catalyst is preferably an organosilicon compound having, for example, one or more alkoxysilyl groups and one or more amino groups in one molecule or a compound containing a metallic element.

Specific examples of the organosilicon compound include amino silanes such as 3-aminopropylmethyldimethoxysilane, 3-aminopropyltrimethoxysilane, 3-aminopropyltriethoxysilane, 3-(2-aminoethylamino)propyltrimethoxysilane, and 3-(2-aminoethylamino)propylmethyldiethoxysilane, and partial hydrolysis products of these amino silanes. 3-aminopropyltrimethoxysilane and 3-aminopropyltriethoxysilane have a high curing rate and are excellent in workability, and are therefore preferable.

Specific examples of the compound containing a metallic element include compounds containing a metallic element such as titanium, aluminum, tin, zinc, and palladium. Metal compounds of titanium or aluminum that have little risk of becoming colored are preferable.

The curing catalyst may be added alone or two or more curing catalysts may be added at any ratio. The curing catalyst is preferably added in an amount of 0.1 to 10 parts by mass relative to 100 parts by mass of the component (A) polysilazane, more preferably 0.5 to 5 parts by mass.

### [Other Components]

The coating agent composition for forming a high-hardness film used in the present invention can have components such as a levelling agent, an inorganic filler, a flame retardant, and a light-absorbing agent added according to the object. Examples of the levelling agent include an alkoxy-group-containing organosilicon compound other than the above-described curing catalyst, a silicone compound, and a low-molecular-weight compound containing a silazane structure.

The total amount of the other components to be added is preferably 0.1 to 200 parts by mass relative to 100 parts by mass of the component (A) polysilazane, more preferably 1 to 100 parts by mass.

### <Method for Forming Film>

The inventive coating agent composition for forming a high-hardness film can be used for coating a base material as it is. The method for forming a film (coating) of the coating agent composition for forming a high-hardness film is not particularly limited, but includes, for example, a roll coating method using a chamber doctor coater, a single roll kiss coater, a reverse kiss coater, a bar coater, a reverse roll coater, a normal rotation roll coater, a blade coater, or a knife coater; a spin coating method, a dispensing method, a dipping method, a spraying method, a transferring method, and a slit coating method. In addition, when the above-described coating methods cannot be used, it is also possible to employ a wipe-coating method of coating a base material using any fabric or paper or the like soaked with the coating agent composition for forming a high-hardness film.

Examples of the base material to be coated include a silicon substrate, a glass substrate, a metal substrate, a resin-coated metal substrate, a resin substrate, and a resin film. It is also possible to apply the composition to a substrate provided with a circuit or a semiconductor film in the process of forming a semiconductor device if necessary. The thickness of the coating film differs based on the object of using the film, and is generally 10 to 100,000 nm, preferably 100 to 1,000 nm in thickness of the cured film.

### <Curing Method>

After applying the inventive coating agent composition for forming a high-hardness film by a method for forming a film described above to form a polysilazane resin coating film, it is preferable to perform a dry-curing treatment, although the method for curing is not particularly limited. This treatment intends to remove the solvent contained in the coating film completely and to perform a curing reaction to promote the changing reaction of a silazane bond to a siloxane bond.

The temperature for the dry-curing treatment is appropriately selected according to the base material used, but is preferably 0°C to 300°C, more preferably 25°C to 150°C. The time of the dry-curing treatment varies depending on the treatment temperature, but can be about 1 hour to 2 weeks.

In addition, besides heating, steam heating treatment, atmospheric pressure plasma treatment, low temperature plasma treatment, UV treatment, excimer treatment, and the like can be employed in the dry-curing treatment. The treatments can be selected according to the combination with the corresponding base material.

### <Cured Film>

The inventive coating agent composition for forming a high-hardness film is cured, for example, by a curing method described above to form a cured film. This cured film is composed of the cured material of the above-described coating agent composition, and therefore, has high hardness and is excellent in water repellency.

The cured film on a glass substrate preferably has a pencil hardness of 3H or harder as measured by a method described in JIS K 5600-5-4:1999. Such a cured film is resistant to scratches, and allows a coating film with good design where scratches do not become conspicuous. Therefore, the cured film is suitable for forming an antifouling coating film for a transport vehicle and for a film for preventing scratches to housing facilities such as a sink or a sanitary facility.

The cured film has high hardness and is excellent in water repellency, and therefore, a transport vehicle provided with this cured film is particularly excellent in antifouling property, scratch preventing property, and water repellency in case of rain or the like.

As described above, the inventive coating agent composition for forming a high-hardness film is dissolved in highly safe organic solvents, has high storage stability, has favorable wettability to a base material, and can form a cured film with high hardness having excellent water repellency.

### EXAMPLE

Hereinafter, the present invention will be specifically described with reference to Examples and Comparative Examples. However, the present invention is not limited thereto.

### <Preparation Example of (A) Polysilazane>

As described below, PSZ-1 to PSZ-5 of polysilazanes having a methyl group were prepared.

### [Polysilazane Preparation-1 (PSZ-1)]

Into 300 ml of dehydrated pyridine at -10°C, 0.04 mol of methyldichlorosilane was added dropwise while stirring under a nitrogen atmosphere. Then, into the pyridine, 0.16 mol of dichlorosilane with a purity of 99% or more was blown together with nitrogen gas while stirring. Subsequently, 0.60 mol of ammonia with a purity of 99% or more was blown thereinto, and the formed salt was removed by pressure filtration to give a polysilazane solution. The obtained polysilazane had a weight-average molecular weight of 2,600.

This polysilazane solution was heated to 150°C to distill off 150 ml of the pyridine. Next, 300 ml of dibutyl ether was added to remove the pyridine by azeotropic distillation, and dibutyl ether was added so that the polysilazane was 20 mass% of the entire solution (PSZ-1).

### [Polysilazane Preparation-2 (PSZ-2)]

Into 300 ml of dehydrated pyridine at -10°C, 0.06 mol of methyldichlorosilane was added dropwise while stirring under a nitrogen atmosphere. Then, into the pyridine, 0.14 mol of dichlorosilane with a purity of 99% or more was blown together with nitrogen gas while stirring. Subsequently, 0.60 mol of ammonia with a purity of 99% or more was blown thereinto, and the formed salt was removed by pressure filtration to give a polysilazane solution. The obtained polysilazane had a weight-average molecular weight of 2,000.

This polysilazane solution was heated to 150°C to distill off 150 ml of the pyridine. Next, 300 ml of dibutyl ether was added to remove the pyridine by azeotropic distillation, and dibutyl ether was added so that the polysilazane was 20 mass% of the entire solution (PSZ-2).

### [Polysilazane Preparation-3 (PSZ-3)]

Into 300 ml of dehydrated pyridine at -10°C, 0.10 mol of methyldichlorosilane was added dropwise while stirring in a under a nitrogen atmosphere. Then, into the pyridine, 0.10 mol of dichlorosilane with a purity of 99% or more was blown together with nitrogen gas while stirring. Subsequently, 0.60 mol of ammonia with a purity of 99% or more was blown thereinto, and the formed salt was removed by pressure filtration to give a polysilazane solution. The obtained polysilazane had a weight-average molecular weight of 1,500.

This polysilazane solution was heated to 150°C to distill off 150 ml of the pyridine. Next, 300 ml of dibutyl ether was added to remove the pyridine by azeotropic distillation, and dibutyl ether was added so that the polysilazane was 20 mass% of the entire solution (PSZ-3).

### [Polysilazane Preparation-4 (PSZ-4)]

Into 300 ml of dehydrated pyridine at -10°C, 0.02 mol of methyldichlorosilane was added dropwise while stirring under a nitrogen atmosphere. Then, into the pyridine, 0.18 mol of dichlorosilane with a purity of 99% or more was blown together with nitrogen gas while stirring. Subsequently, 0.60 mol of ammonia with a purity of 99% or more was blown thereinto, and the formed salt was removed by pressure filtration to give a polysilazane solution. The obtained polysilazane had a weight-average molecular weight of 2,900.

This polysilazane solution was heated to 150°C to distill of 150 ml of the pyridine. Next, 300 ml of dibutyl ether was added to remove the pyridine by azeotropic distillation, and dibutyl ether was added so that the polysilazane was 20 mass% of the entire solution (PSZ-4).

### [Polysilazane Preparation-5 (PSZ-5)]

Into 300 ml of dehydrated pyridine at -10°C, 0.12 mol of methyldichlorosilane was added dropwise while stirring under a nitrogen atmosphere. Then, into the pyridine, 0.08 mol of dichlorosilane with a purity of 99% or more was blown together with nitrogen gas while stirring. Subsequently, 0.60 mol of ammonia with a purity of 99% or more was blown thereinto, and the formed salt was removed by pressure filtration to give a polysilazane solution. The obtained polysilazane had a weight-average molecular weight of 2,900.

This polysilazane solution was heated to 150°C to distill of 150 ml of the pyridine. Next, 300 ml of dibutyl ether was added to remove the pyridine by azeotropic distillation, and dibutyl ether was added so that the polysilazane was 20 mass% of the entire solution (PSZ-5).

The following were used as the components (B) to (D) .

### (B) Aliphatic hydrocarbon solvent

Isopar G manufactured by Exxon Mobile Corporation (flash point: 44°C)
Kyowasol C-900 manufactured by KH Neochem Co., Ltd. (flash point: 23.1°C)
Marukasol R manufactured by Maruzen Petrochemical Co., Ltd. (flash point: 48°C)
Isopar L manufactured by Exxon Mobile Corporation (flash point: 65°C)

### (C) Dibutyl ether manufactured by Kanto Chemical Co., Inc. (flash point: 25°C)

### (D) Curing catalyst

KBE-903: 3-aminopropyltriethoxysilane manufactured by Shin-Etsu Chemical Co., Ltd.

### [Examples 1 to 5 and Comparative Examples 1 to 5]

The polysilazane, the aliphatic hydrocarbon solvent, and dibutyl ether were blended in the proportions (mass%) shown in Table 1, and 0.5 parts by mass of the curing catalyst shown in Table 1 was further added relative to 100 parts by mass of the polysilazane to prepare coating agent compositions for forming a high-hardness film.

The prepared coating agent compositions for forming a high-hardness film were applied onto a glass substrate using a tissue paper, and the resultant was left standing for one week under the conditions of 25°C/40%RH to obtain a cured film.

### <Methylsilane Introduction Ratio>

The ratio of the number of the repeating unit shown by the formula (2) to the total number of the repeating units shown by the formulae (1) and (2) in each prepared polysilazane is shown as "methylsilane introduction ratio" in Table 1.

### <Solubility Evaluation>

The appearance of the coating agent composition for forming a high-hardness film prepared in Examples 1 to 5 and Comparative Examples 1 to 5 was observed visually. Cases where the composition was colorless and transparent have been marked with "good", and cases where there were clouding or precipitation have been marked with "poor". Table 1 shows the results.

### <Odor Evaluation>

Five panelists who have been made to comprehend the odor of dibutyl ether beforehand smelled the odor of the coating agent compositions for forming a high-hardness film prepared in Examples 1 to 5 and Comparative Examples 1 to 5. The evaluation has been given according to the number of panelists who noticed the ethereal odor according to the following criteria. Table 1 shows the results.
good: 0 to 1 panelist noticed the ethereal odor.
poor: 2 or more panelists noticed the ethereal odor.

### <Evaluation of Contact Angle with Water>

The contact angle of the cured film on a glass substrate to water (20 µL) was measured using a contact angle meter Drop Master (manufactured by Kyowa Interface Science Co., Ltd.). Table 1 shows the results.

### <Pencil Hardness Evaluation>

The pencil hardness of the cured film on a glass substrate was measured using a pencil hardness tester (manufactured by Pepaless Co., Ltd.) according to the method described in JIS K 5600-5-4:1999. Table 1 shows the results.

**[Table 1]**

| | (A) Polysilazane | | | (B) Aliphatic hydrocarbon solvent | | | (C) Dibutyl ether | | (D) Curing catalyst | Evaluation | | | |
|---|---|---|---|---|---|---|---|---|---|---|---|---|---|
| | Sample name | Methylsilane introduction ratio | Blended amount (mass%) | Type of solvent | Flash point (°C) | Blended amount (mass%) | Blended amount (mass%) | (C)/(B)+(C) (mass%) | Type of catalyst | Solubility | Odor | Contact angle with water (dec) | Pencil hardness |
| Example 1 | PSZ-1 | 0.2 | 2.5 | Isopar G | 44 | 87.5 | 10 | 10.3 | KBE-903 | good | good | 97 | 7H |
| Example 2 | PSZ-2 | 0.3 | 2.5 | Isopar G | 44 | 87.5 | 10 | 10.3 | KBE-903 | good | good | 98 | 7H |
| Example 3 | PSZ-3 | 0.5 | 2.5 | Isopar G | 44 | 87.5 | 10 | 10.3 | KBE-903 | good | good | 95 | 7H |
| Example 4 | PSZ-2 | 0.3 | 2.5 | Kyowasol C-900 | 23. 1 | 87.5 | 10 | 10.3 | KBE -903 | good | good | 98 | 7H |
| Example 5 | PSZ-2 | 0.3 | 2.5 | Marukasol R | 48 | 87.5 | 10 | 10.3 | KBE-903 | good | good | 97 | 6H |
| Comparative Example 1 | PSZ-4 | 0.1 | 2.5 | Isopar G | 44 | 87.5 | 10 | 10.3 | KBE-903 | poor | - | - | - |
| Comparative Example 2 | PSZ-5 | 0.6 | 2.5 | Isopar G | 44 | 87.5 | 10 | 10.3 | KBE-903 | good | good | 95 | B |
| Comparative Example 3 | PSZ-2 | 0.3 | 2.5 | Isopar L | 65 | 87.5 | 10 | 10.3 | KBE-903 | good | good | 92 | H |
| Comparative Example 4 | PSZ-2 | 0.3 | 2.5 | Isopar G | 44 | 97.5 | 0 | 0.0 | KBE-903 | poor | - | - | - |
| Comparative Example 5 | PSZ-2 | 0.3 | 2.5 | Isopar G | 44 | 67.5 | 30 | 30.8 | KBE-903 | good | poor | 97 | 7H |

As shown in Table 1, the coating agent compositions for forming a high-hardness film of Examples 1 to 5 had superior solubility to aliphatic hydrocarbon solvents compared with the coating agent composition for forming a high-hardness film of Comparative Example 1 having a methylsilane introduction ratio of 0.1 and the coating agent composition for forming a high-hardness film of Comparative Example 4 containing no dibutyl ether. In addition, the coating agent compositions of Examples 1 to 5 had favorable storage stability and wettability to a base material was also improved since dibutyl ether was contained in an appropriate amount. Thus, it was revealed that if the proportion of the repeating unit shown by the formula (2) (methylsilane introduction ratio) is too low (Comparative Example 1) or if dibutyl ether is not contained (Comparative Example 4), the composition cannot be used as a coating agent composition, but the inventive coating agent composition for forming a high-hardness film is excellent in solubility to aliphatic hydrocarbon solvents and has favorable storage stability.

In addition, the cured films formed from the cured coating agent compositions for forming a high-hardness film of Examples 1 to 5 had higher pencil hardness compared with the cured films formed from the coating agent composition for forming a high-hardness film of Comparative Example 2 having a methylsilane introduction ratio of 0.6 and the coating agent composition for forming a high-hardness film of Comparative Example 3 containing an aliphatic hydrocarbon solvent having a flash point of 65°C. Thus, it was revealed that if the proportion of the repeating unit shown by the formula (2) (methylsilane introduction ratio) is too high (Comparative Example 2) or if the flash point of the aliphatic hydrocarbon solvent is too high (Comparative Example 3), the hardness of the cured film becomes degraded, but the inventive coating agent composition for forming a high-hardness film gives a cured film (coating film) having high hardness.

Furthermore, it was revealed that the coating agent compositions for forming a high-hardness film of Examples 1 to 5 had little odor compared with the coating agent composition for forming a high-hardness film of Comparative Example 5 containing 30 mass% of dibutyl ether. Thus, it was revealed that the inventive coating agent composition for forming a high-hardness film is a coating agent that has little unpleasant odor and is excellent in workability, and places where the coating agent can be used are not limited.

As described above, according to the inventive coating agent composition for forming a high-hardness film, polysilazane for forming a film is soluble in organic solvents that are highly safe, for example, with little odor and low toxicity. Therefore, the composition has favorable workability together with improved storage stability and wettability to a base material, and provides a cured film with high hardness and water repellency.

### (Industrial Applicability)

The inventive coating agent composition for forming a high-hardness film is soluble in highly safe organic solvents, has improved storage stability and wettability to a base material, and provides a cured film with excellent water repellency and high hardness. Therefore, the composition can be used suitably as a coating agent for the body of a vehicle, the outer wall of a building, or the like.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A coating agent composition for forming a high-hardness film comprising:
(A) polysilazane having a repeating unit shown by the following formula (1) and a repeating unit shown by the following formula (2), wherein a ratio of a number of the repeating unit shown by the formula (2) to a total number of the repeating units shown by the formulae (1) and (2) is 0.2 to 0.5;
(B) an aliphatic hydrocarbon solvent having a flash point of 21°C to 55°C; and
(C) dibutyl ether;
wherein a blended amount of the component (C) is 0.1 to 20 mass% of a total blended amount of the component (B) and the component (C), and 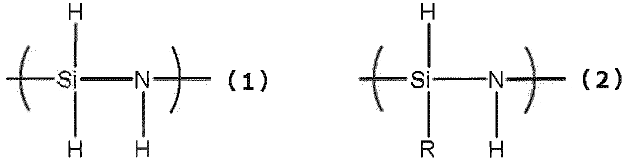
wherein R represents a group selected from an aliphatic hydrocarbon group having 1 to 6 carbon atoms, an aromatic hydrocarbon group having 6 to 12 carbon atoms, and an alkoxy group having 1 to 6 carbon atoms, and each R is the same or different in one molecule of the polysilazane.

2. The coating agent composition for forming a high-hardness film according to claim 1, wherein the R in the formula (2) is a methyl group.

3. The coating agent composition for forming a high-hardness film according to claim 1 or 2, wherein a blended amount of the component (A) is 0.1 to 20 mass% of a total blended amount of the components (A) to (C).

4. The coating agent composition for forming a high-hardness film according to any one of claims 1 to 3, wherein the component (B) comprises at least one aliphatic hydrocarbon solvent selected from aliphatic hydrocarbons having 9 to 12 carbon atoms.

5. The coating agent composition for forming a high-hardness film according to any one of claims 1 to 4, further comprising (D) a curing catalyst.

6. A cured film comprising a cured material of the coating agent composition for forming a high-hardness film according to any one of claims 1 to 5.

7. A high-hardness coating film comprising the cured film according to claim 6, wherein the cured film on a glass substrate has a pencil hardness of 3H or harder as measured by a method described in JIS K 5600-5-4:1999.

8. A transport vehicle comprising the cured film according to claim 6.

## Patentansprüche

1. Beschichtungsmittelzusammensetzung zur Bildung eines Films mit hoher Härte, umfassend:
(A) Polysilazan mit einer durch die folgende Formel (1) gezeigten sich wiederholenden Einheit und einer durch die folgende Formel (2) gezeigten sich wiederholenden Einheit, wobei das Verhältnis der Anzahl der durch die Formel (2) gezeigten sich wiederholenden Einheiten zur Gesamtzahl der durch die Formeln (1) und (2) gezeigten sich wiederholenden Einheiten 0,2 bis 0,5 beträgt;
(B) ein aliphatisches Kohlenwasserstoff-Lösungsmittel mit einem Flammpunkt von 21°C bis 55°C; und
(C) Dibutylether;
wobei die gemischte Menge der Komponente (C) 0,1 bis 20 Massen-% der gesamten gemischten Menge der Komponente (B) und der Komponente (C) beträgt, und 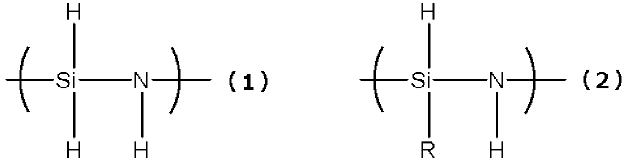
worin R eine Gruppe darstellt, die aus einer aliphatischen Kohlenwasserstoffgruppe mit 1 bis 6 Kohlenstoffatomen, einer aromatischen Kohlenwasserstoffgruppe mit 6 bis 12 Kohlenstoffatomen und einer Alkoxygruppe mit 1 bis 6 Kohlenstoffatomen ausgewählt ist, und jedes R in einem Molekül des Polysilazans gleich oder verschieden ist.

2. Beschichtungsmittelzusammensetzung zur Bildung eines Films mit hoher Härte nach Anspruch 1, wobei das R in der Formel (2) eine Methylgruppe ist.

3. Beschichtungsmittelzusammensetzung zur Bildung eines Films mit hoher Härte nach Anspruch 1 oder 2, wobei die gemischte Menge der Komponente (A) 0,1 bis 20 Masse-% der gesamten gemischten Menge der Komponenten (A) bis (C) beträgt.

4. Beschichtungsmittelzusammensetzung zur Bildung eines Films mit hoher Härte nach einem der Ansprüche 1 bis 3, wobei die Komponente (B) mindestens ein aliphatisches Kohlenwasserstofflösungsmittel, ausgewählt aus aliphatischen Kohlenwasserstoffen mit 9 bis 12 Kohlenstoffatomen, umfasst.

5. Beschichtungsmittelzusammensetzung zur Bildung eines Films mit hoher Härte nach einem der Ansprüche 1 bis 4, die ferner (D) einen Härtungskatalysator enthält.

6. Gehärteter Film, der ein ausgehärtetes Material der Beschichtungsmittelzusammensetzung zur Bildung eines Films mit hoher Härte nach einem der Ansprüche 1 bis 5 enthält.

7. Beschichtungsfilm mit hoher Härte, umfassend den gehärteten Film nach Anspruch 6, wobei der gehärtete Film auf einem Glassubstrat eine Bleistifthärte von 3H oder härter aufweist, gemessen nach einem in JIS K 5600-5-4:1999 beschriebenen Verfahren.

8. Transportvehikel, das den gehärteten Film nach Anspruch 6 enthält.

## Revendications

1. Composition d'agent de revêtement pour former un film de dureté élevée comprenant :
(A) du polysilazane ayant un motif de répétition représenté par la formule (1) suivante et un motif de répétition représenté par la formule (2) suivante, dans lequel un rapport d'un nombre du motif de répétition représenté par la formule (2) sur un nombre total des motifs de répétition représentés par les formules (1) et (2) est de 0,2 à 0,5 ;
(B) un solvant hydrocarbure aliphatique ayant un point d'éclair de 21 °C à 55 °C ; et
(C) de l'éther dibutylique ;
dans lequel une quantité mélangée du composant (C) est de 0,1 à 20 % en masse d'une quantité mélangée totale du composant (B) et du composant (C), et 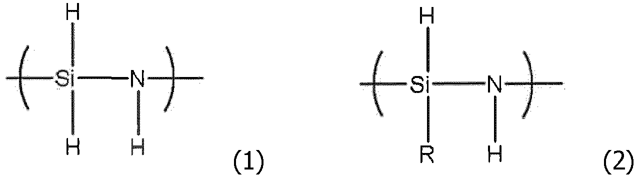
dans laquelle R représente un groupe choisi parmi un groupe hydrocarboné aliphatique ayant 1 à 6 atomes de carbone, un groupe hydrocarboné aromatique ayant 6 à 12 atomes de carbone et un groupe alcoxy ayant 1 à 6 atomes de carbone, et chaque R est identique ou différent dans une molécule du polysilazane.

2. Composition d'agent de revêtement pour former un film de dureté élevée selon la revendication 1, dans laquelle le R dans la formule (2) est un groupe méthyle.

3. Composition d'agent de revêtement pour former un film de dureté élevée selon la revendication 1 ou 2, dans laquelle une quantité mélangée du composant (A) est de 0,1 à 20 % en masse d'une quantité mélangée totale des composants (A) à (C).

4. Composition d'agent de revêtement pour former un film de dureté élevée selon l'une quelconque des revendications 1 à 3, dans laquelle le composant (B) comprend au moins un solvant hydrocarbure aliphatique choisi parmi les hydrocarbures aliphatiques ayant 9 à 12 atomes de carbone.

5. Composition d'agent de revêtement pour former un film de dureté élevée selon l'une quelconque des revendications 1 à 4, comprenant en outre (D) un catalyseur de durcissement.

6. Film durci comprenant un matériau durci de la composition d'agent de revêtement pour former un film de dureté élevée selon l'une quelconque des revendications 1 à 5.

7. Film de revêtement de dureté élevée comprenant le film durci selon la revendication 6, dans lequel le film durci sur un substrat en verre a une dureté au crayon de 3H ou plus telle que mesurée par un procédé décrit dans la norme JIS K 5600-5-4 :1999.

8. Véhicule de transport comprenant le film durci selon la revendication 6.
